# EUROPÄISCHE PATENTANMELDUNG

(11) **EP 0 998 161 A2**
(43) Veröffentlichungstag der Anmeldung: **03.05.2000**
(21) Anmeldenummer: 99119557.9
(22) Anmeldetag: 01.10.1999
(51) Int. Cl.: H04Q 11/00

(54) **Kreuzschalteinrichtung für Wellenlängenmultiplex-Signale**

(30) Priorität: 29.10.1998 DE 19849979
(71) Anmelder: SIEMENS AKTIENGESELLSCHAFT, 80333 München (DE)
(72) Erfinder: Müller, Horst, 82069 Hohenschäftlarn (DE)

(57) **Zusammenfassung**

Kreuzschalteinrichtung für mehrere WDM-Signale (E1 bis Em), deren Teilsignale (λ11 - λmn) durchgeschaltet und in Ausgangs-Teilsignale (Λ11 - Λmn) mit gegebenenfalls anderen Wellenlängen umgesetzt werden. Die Umsetzung erfolgt bei optischen und elektrischen Koppelfeldern (OK, EK) durch Modulatoren (MC11 ...MCmn; MO11 ...MOmn) wobei entsprechende Ausgangs-Teilsignale (Λ11, Λ21... Λm1; ..) mehrerer WDM-Ausgangssignale (A1 bis Am) mit Hilfe derselben Trägersignale (λ1 - λn) erzeugt werden.

## Beschreibung

Die Erfindung betrifft eine Kreuzschalteinrichtung zum Durchschalten von zu mehreren Wellenlängen-Multiplexsignalen zusammengefaßten optischen Teilsignalen nach dem Oberbegriff des Patentanspruchs 1.

In optischen Netzen mit Wellenlängen-Multiplextechnik stellt das Wellenlängen-Management - WDM-Management - ein technisches und wirtschaftliches Problem dar. Bei einer Kreuzschalteinrichtung (Cross Connect) mit WDM-Anschlüssen muß z.B. ein eingangsseitiges optisches Teilsignal mit einer bestimmten ersten Wellenlänge, das einem WDM-Multiplexsignal angehört, in ein ausgangsseitiges optisches Teilsignal mit einer zweiten Wellenlänge umgesetzt werden und anschließend mit anderen umgesetzten oder Teilsignalen zu einem neu konfigurierten WDM-Signal zusammengesetzt werden.

Aus Lightwave, Februar 1998, Seite 92 bis 99 sind elektrische und optische Kreuzschalteinrichtungen beschrieben. Bei der Verwendung von elektrischen Koppelfeldern werden die optischen Signale zunächst in elektrische Teilsignale umgesetzt, die durch das Koppelfeld neu konfiguriert werden. Die Ausgangssignale des Koppelfeldes werden elektrisch/optischen Modulatoren zugeführt, bei denen ein Lasersignal durch ein elektrisches Ausgangssignal moduliert wird. Für die Umsetzung in elektrische Signale und Erzeugung der einzelnen Lasersignale ist ein erheblicher Aufwand erforderlich.

Werden dagegen optische Koppelfelder verwendet, dann ist zwar keine optoelektrische Umsetzung erforderlich, es müssen jedoch Wellenlängenkonverter eingesetzt werden. Aus ECOC 94, Vol. 2, Seite 635 bis 642 sind solche optischen Konverter bekannt. Nachteilig ist der hohe Aufwand, der für die Erzeugung individueller Trägersignale erforderlich ist.

Aufgabe der Erfindung ist es, Kreuzschalteinrichtungen mit geringerem Aufwand anzugeben.

Eine derartige Kreuzschalteinrichtung mit einem optischen Koppelfeld ist in Anspruch 1 angegeben; eine Kreuzschalteinrichtung mit einem elektrischen Koppelfeld in dem unabhängigen Patentanspruch 3.

Vorteil der Erfindung ist es, daß die auf der Ausgangsseite des Koppelfeldes benötigten optischen Signale, die jeweils ein Multiplexsignal bilden, für jedes Multiplexsignal dieselben Wellenlängen aufweisen und deshalb die Trägersignale nur einmal erzeugt werden. Es können hierbei dieselben Wellenlängen wie bei den Eingangssignalen benötigt werden, es kann jedoch ebenso eine Umsetzung in Signale mit anderen Wellenlängen erfolgen, wenn der Trägersignalgenerator entsprechend ausgelegt ist.

Dasselbe Prinzip wird bei der Verwendung von elektrischen Koppelfeldern angewendet.

Vorteilhafte Weiterbildungen der Erfindung sind in den Unteransprüchen angegeben.

Die Erfindung wird anhand von Figuren näher erläutert.

Es zeigen:
- Figur 1: ein erstes Ausführungsbeispiel der Erfindung mit einem optischen Koppelfeld,
- Figur 2: eine Kreuzschalteinrichtung mit zusätzlichen optischen Verstärkern und
- Figur 3: ein weiteres Ausführungsbeispiel der Kreuzschalteinrichtung mit einem elektrischen Koppelfeld und elektrooptischen Modulatoren

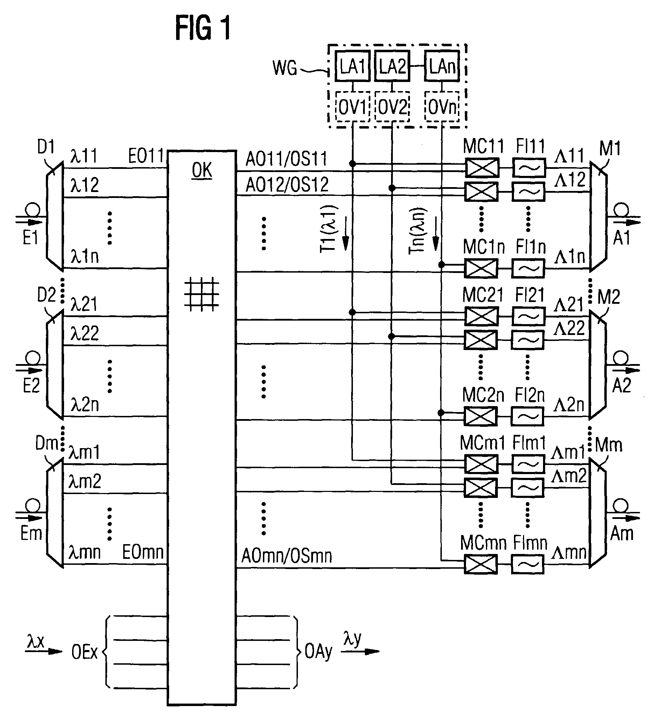

In **Figur 1** ist ein Prinzipschaltbild einer Kreuzschalteinrichtung mit einem optischen Koppelfeld OK dargestellt. Mehrere WDM-Signale E1 bis Em werden jeweils einem Demultiplexer (oder einer gleichwirkenden Einrichtung) D1 bis Dm zugeführt und dort in einzelne optische Teilsignale λ11 bis λ1n; λ21 bis λ2n usw. bis λm1 bis λmn aufgeteilt. Die optischen Signale der verschiedenen WDM-Signale können dieselben Wellenlängen aufweisen; so sind hier die Wellenlänge des Signals λ11 und die Wellenlängen der Signale λ21 bis λm1 gleich; ebenso haben die weiteren entsprechenden Teilsignale z.B. λ12, λ22 bis λm2 eine andere Wellenlänge gemeinsam usw.

Die einzelnen optischen Teilsignale werden Eingängen EO11 bis EOmn des optischen Koppelfeldes zugeführt. Dieses schaltet die Signale an beliebige Ausgänge AO11 bis AOmn durch. Die dort abgegebenen Ausgangssignale OS11 bis OSmn weisen zunächst jeweils dieselbe Wellenlänge wie das zugehörige Eingangssignal λ11 bis λmn auf. Sie müssen jedoch in der Regel in andere Wellenlängen umgesetzt werden, bevor sie zu neu konfigurierten WDM-Ausgangssignalen A1 bis Am zusammengefügt werden. Dies erfolgt in Modulatoren MC11 bis MCmn. Die hierzu benötigten Trägersignale T1 bis Tn können dieselben Wellenlängen λ1 bis λn wie die Teilsignale jeder Gruppe der WDM-Eingangssignale aufweisen; es kann jedoch auch gleichzeitig eine Umsetzung in andere Wellenlängenbereiche durchgeführt werden. Die Trägersignale werden von einem Trägersignalgenerator WG geliefert. Hier sind es mehrere Laser mit nachgeschalteten optischen Verstärkern OV1 bis OVn, die Signale mit genauen Frequenzen liefern. Jedes dieser Trägersignale wird jeweils einem von n Modulatoren zugeführt, die Gruppen von optischen Ausgangssignalen, z.B. OS11 bis SO1n, in optische Ausgangs-Teilsignale Λ11 bis Λ1n; Λ21 bis Λ2n, ..., und Λm1 bis Λmn umsetzt, die mit Hilfe von Multiplexern M1 bis Mn zu WDM-Ausgangssignalen A1 bis Am zusammengefaßt werden. Beispielsweise wird das Trägersignal T1 jeweils den ersten Modulatoren MC11, MC21 bis MCm1 zugeführt. Die Funktion der Modulatoren ist in den in der Beschreibungseinleitung genannten Literaturstellen angegeben. Die Modulatoren erzeugen ein Ausgangsspektrum, aus dem die gewünschte Ausgangswellenlänge herausgefiltert wird. Zu diesem Zweck sind den Modulatoren Filter FI11 bis FImn nachgeschaltet, die für jede Gruppe dieselben Durchlaßbereiche aufweisen können.

Ein maximaler Kostenvorteil ergibt sich, wenn sämtliche Gruppen von Ausgangs-Teilsignalen Λ11 bis Λ1n; Λ21 bis Λ2n,..., und Λm1 bis Λmn dieselben Wellenlängen, also dieselben Trägersignale T1 bis Tn (mit den Wellenlängen λ1 bis λn) benutzen. Es können natürlich auch WDM-Ausgangssignale A1 bis Am mit unterschiedlichen Wellenlängenbereichen realisiert werden, wofür jedoch aufwendigere Trägersignalgeneratoren, beispielsweise zusätzliche Laser erforderlich wären.

Das Koppelfeld kann selbstverständlich auch noch zusätzliche Einzelsignale λx oder nur Einzelsignale auf beliebige Ausgänge AO11 bis AOmn oder Einzelsignalausgänge AOy (die Ausgangs-Einzelsignale an den Ausgängen AOy sind mit λy bezeichnet) durchschalten. Ebenso können Teilsignale λ11 bis λmn auf die Einzelsignalausgänge AOy durchgeschaltet werden.

Auf die Darstellung von Einzelheiten wie weiteren optischen Verstärkern, Regeneratoren, Steuerung, usw., die für die Erfindung nicht wesentlich sind, wurde verzichtet.

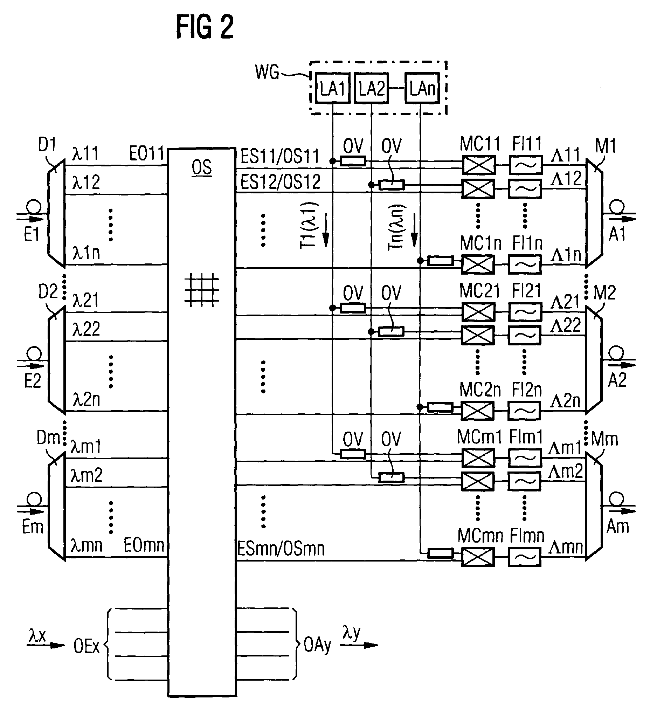

In **Figur 2** ist eine Variante der Kreuzschalteinrichtung dargestellt, bei der lediglich den einzelnen Modulatoren optische Verstärker OV vorgeschaltet sind, um eine bessere Entkopplung zwischen dem optischen Signale zu erreichen.

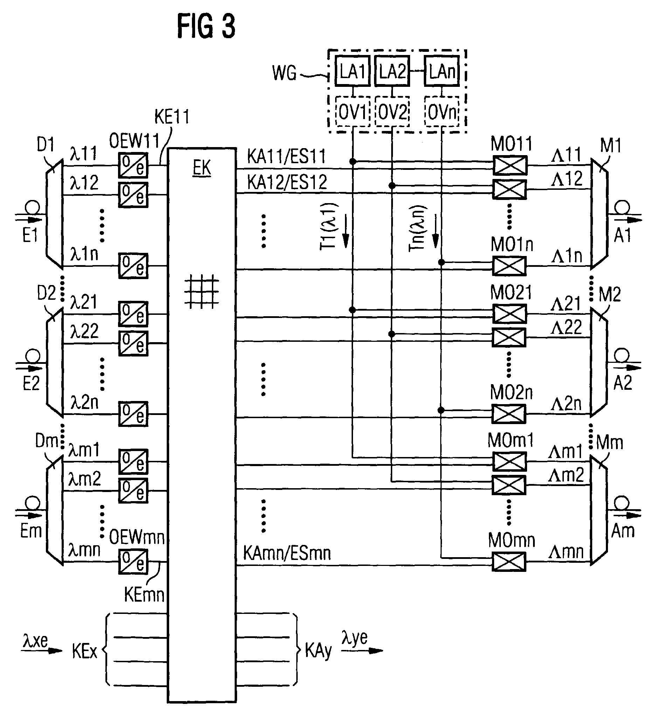

In **Figur 3** wird anstelle eines optischen Koppelfeldes ein elektrisches Koppelfeld EK verwendet. Die empfangenen optischen Teilsignale λ11 bis λmn müssen zunächst jeweils in einem optoelektrischen Wandler OEW11 bis OEWmn in elektrische Signale umgesetzt werden, die den Eingängen KE11 bis KEmn des elektrischen Koppelfeldes zugeführt werden. Dieses schaltet in bekannter Weise die Teilsignale an Koppelfeldausgänge KA11 bis KAmn durch. Die elektrischen Ausgangssignale ES11 bis ESmn werden zur Steuerung von Modulatoren MO11 bis MOmn verwendet, denen wiedertun die Trägersignale T1 bis Tn zugeführt werden. Wird als Modulation die heute häufig verwendete Ein-Aus-Tastung (ASK) angewendet, so können entsprechend einfache Absorbtionsmodulatoren verwendet werden. Auf ein dem Modulator nachgeschaltetes Filter kann häufig verzichtet werden. Eine Gruppe von Ausgangssignalen wird in eine Gruppe von Ausgangs-Teilsignalen Λ11 bis Λ1n usw. umgesetzt, die jeweils ein WDM-Ausgangssignal A1 bis Am bilden.

Es können auch wieder zusätzliche elektrische Einzelsignale λxe entsprechend wie beim optischen Koppelfeld von Eingängen KEx auf Ausgänge KAy durchgeschaltet werden. Die Ausgangs-Einzelsignale sind mit λye bezeichnet.

## Patentansprüche

1. Kreuzschalteinrichtung zum Durchschalten von optischen Teilsignalen (λ11 - λ1n; λ21 - λ2n, λm1 - λmn), die zu mehreren Wellenlängenmultiplex(WDM)-Signalen (E1, ..., Em) zusammengefaßt sind und/oder von Einzelsignalen und zum Zusammenfügen dieser Teilsignale und/oder Einzelsignale zu neu konfigurierten WDM-Ausgangssignalen (A1,..., Am)
mit WDM-Demultiplexern (D1 bis Dm), denen die WDM-Signale (E1 bis En) zugeführt werden und die an ihren Ausgängen die Teilsignale (λ11 - λ1n; λ21 - λ2n, λm1 - λmn) abgeben,
mit einem optischen Koppelfeld (OK), dessen Eingängen (EO11 bis EOmn) diese Teilsignale und/oder Einzelsignale zugeführt werden,
mit Wellenlängen-Konvertern (MC11 - MCmn, FI11 - FImn), denen jeweils ein Ausgangssignal (OS11 - OSmn) des optischen Koppelfeldes (OK) zugeführt wird, das in ein Ausgangs-Teilsignal (Λ11 - Λmn) häufig mit anderer Wellenlänge umgesetzt wird, und
mit Multiplexern (M1 - Mn), die diese Ausgangs-Teilsignale (Λ11 - Λmn) zu neu konfigurierten WDM-Ausgangssignalen (A1 bis An) zusammenfügen,
**dadurch gekennzeichnet,**
daß als Wellenlängen-Konverter Modulatoren (MC11 - MCmn) vorgesehen sind,
daß ein Trägersignalgenerator (WG) vorgesehen ist, der entsprechend der Anzahl von Ausgangs-Teilsignalen (Λ11 - Λ1n) mit unterschiedlichen Wellenlängen eine gleiche Anzahl von Trägersignalen (T1 - Tn) erzeugt,
daß diese Trägersignale (T1 - Tn) jeweils mehreren Modulatoren (MC11, MC21,...., MCm1; ...) zur Bildung von mehreren WDM-Ausgangssignalen (A1, A2,..., Am), deren Ausgangs-Teilsignale jeweils dieselben Wellenlängen (λ1 - λn) aufweisen, zugeführt sind,
und daß die optischen Ausgangssignale (OS11 - Osmn) zur Modulation der Trägersignale(T1 - Tn) den Modulatoren (MC11, MC21,...., MCm1; ...) zugeführt sind.

2. Kreuzschalteinrichtung zum Durchschalten von optischen Teilsignalen (λ11 - λ1n; λ21 - λ2n, λm1 - λmn), die zu mehreren Wellenlängenmultiplex(WDM)-Signalen (E1, ..., Em) zusammengefaßt sind und/oder von Einzelsignalen (λx, λxe) und zum Zusammenfügen dieser Teilsignale und/oder Einzelsignale zu neu konfigurierten WDM-Ausgangssignalen (A1 bis Am)
mit WDM-Demultiplexern (D1 bis Dm), denen die WDM-Signale (E1 bis Em) zugeführt werden und die an ihren Ausgängen die Teilsignale (λ11 - λ1n; λ21 - λ2n, λm1 - λmn) abgeben,
mit optoelektrischen Wandlern (OEW11 - OEWmn) zum Umsetzten in elektrische Teilsignale,
mit einem elektrischen Koppelfeld (EK), dessen Eingängen diese elektrischen Teilsignale und/oder Einzelsignale zugeführt werden,
mit elektrooptischen Wandlern, denen die Ausgangssignale (ES11 - ESmn) des elektrischen Koppelfeldes (EK) zugeführt wurden, die in neu konfigurierte Ausgangs-Teilsignale (Λ11 bis Λmn) umgesetzt werden, und
mit Multiplexern (M1 - Mn), die diese Ausgangs-Teilsignale (ES11 - ESmn) zu neu konfigurierten WDM-Ausgangssignalen (A1 bis An) zusammenfügen,
**dadurch gekennzeichnet,**
daß als elektrooptische Wandler Modulatoren (MO11 - MOmn) vorgesehen sind,
daß ein Trägersignalgenerator (WG) vorgesehen ist, der entsprechend der Anzahl von Ausgangs-Teilsignalen (Λ11 - Λ1n) mit unterschiedlichen Wellenlängen (λ1 - λn) eine entsprechende Anzahl von optischen Trägersignalen (T1 - Tn) erzeugt,
daß die Trägersignale (T1- Tn) jeweils mehreren Modulatoren (MC11, MC21,...., MCm1; ...) zur Bildung von mehreren WDM-Ausgangssignalen (A1, A2,..., Am), deren Teilsignale jeweils dieselben Wellenlängen (λ1 - λn) aufweisen, zugeführt sind,
und daß die elektrischen Ausgangssignale (ES11 - Esmn) zur Modulation der Trägersignale(T1 - Tn) den Modulatoren (MC11, MC21,...., MCm1; ...) zugeführt sind.

3. Kreuzschalteinrichtung nach Anspruch 1 oder Anspruch 2,
**dadurch gekennzeichnet,**
daß jedem Modulator (MC11 ...MCmn; MO11 ...MOmn), dem ein Trägersignal (T1 - Tn) zugeführt ist, ein optischer Verstärker (OV) vorgeschaltet ist.

4. Kreuzschalteinrichtung nach Anspruch 1, 2 oder 3,
**dadurch gekennzeichnet,**
daß allen Gruppen von Modulatoren (MC11, ... MCm1; MCm1, ...MCmn), die zur Bildung aller WDM-Ausgangssignale (A1 bis Am) einem der Modulatoren (M1 bis Mm) vorgeschaltet sind, dieselbe Gruppe von Trägersignalen (T1... Tn) zugeführt ist.

5. Kreuzschalteinrichtung nach einem der vorhergehenden Ansprüche,
**dadurch gekennzeichnet,**
daß den Modulatoren (MC11, ..., MCmn; MO11, ..., MOmn) optische Filter (FI11 - FImn) nachgeschaltet sind.

6. Kreuzschalteinrichtung nach einem der vorhergehenden Ansprüche,
**dadurch gekennzeichnet,**
daß ein Trägersignalgenerator (WG) vorgesehen ist, der eine Gruppe von Trägersignalen (T1 - Tn) erzeugt, deren Wellenlängen zu von denen der eingangsseitigen Teilsignale (λ11 - λmn) unterschiedlich sind.

7. Kreuzschalteinrichtung nach einem der vorhergehenden Ansprüche,
**dadurch gekennzeichnet,**
daß zusätzlich Koppelfeld-Einzeleingänge (OEx, Kex) für Einzelsignale (λx, λxe) und Koppelfeld-Einzelausgänge (OAx, KAy) vorgesehen sind, so die Einzelsignale (λx, λxe) und/oder Teilsignale (λ11 - λmn) auf Einzelausgänge (AOy, KAy) des Koppelfeldes durchgeschaltet werden können.
